# EUROPEAN PATENT APPLICATION

(11) **EP 2 388 175 A1**
(43) Date of publication of application: **23.11.2011**
(21) Application number: 10163035.8
(22) Date of filing: 17.05.2010
(51) Int. Cl.: B62B 5/00

(54) **Dolly with strengthened wheel assemblies**

(71) Applicant: CHEP Technology Pty Limited, Sydney, NSW 2000 (AU)
(72) Inventor: Naidu, Vishnu R., Windermere, FL 34786 (US); Tipsarevic, Milos, London, W5 2RE (GB)
(74) Representative: Loqvist, Gabriel Mathias

(57) **Abstract**

A dolly (20) includes a bottom deck (30), an internal rib structure (40) within the bottom deck (30), and a top deck (50) oupled to the bottom deck (30). The internal rib structure (40) has a recessed wheel assembly receiving area (42) in each respective corner of the bottom deck (30). Wheel assemblies (60) are coupled to the bottom deck (30). Each wheel assembly (60) includes an upper plate (62) within a respective recessed wheel assembly receiving area (42) of the internal rib structure (40), and a lower plate (64) adjacent an under side of the bottom deck (30) and aligned with its corresponding upper plate (62). Fasterners (70) secure the upper and lower plates to the bottom deck (30). A wheel (80) is coupled to each lower plate (64).

## Description

### Field of the Invention

The present invention relates to the field of material handling devices, and more particularly, to a dolly for transporting objects placed thereon.

### Background of the Invention

Dollies are used for transporting objects placed thereon, and typically include a rectangular frame formed by connecting top and bottom deck members together. Such dollies typically include wheel assemblies connected to the frame by fasteners that may also used to secure the top and bottom deck members together.

Dollies may be made out of wood or plastic. Plastic is preferable to wood since plastic dollies are often cheaper then wood dollies and easier to manufacturer. In addition, plastic dollies are easier to keep clean.

Dollies may be commonly used as a pooled product, which means that they are leased to customers. Durability and ruggedness are important features of a pooled dolly since a damaged dolly increases operational costs when repairs have to be made. The wheel assemblies are usually the weak point of the dolly.

A dolly with wheel assemblies that include upper and lower plates coupled together to a frame is disclosed in U.S. Patent No. 5,921,566. Each wheel assembly has a lower plate on under side of the frame, and an upper plate on a top side of the frame. Bolts are used to secure the upper and lower plates to the frame. There is a shared or common upper plate for each pair of wheel assemblies. U.S. Published Patent Application No. 2004/0090029 is similar to the '566 patent. A plastic dolly with wheel assemblies secured to a frame with an internal rib structure is disclosed in U.S. Patent No. 7,104,553. A dolly with wheel guards to protect the wheels is disclosed in U.S. Patent No. 7,462,009.

Even in view of the above-described dollies, there is still a need to strength the wheel assemblies.

### Summary of the Invention

In view of the foregoing background, it is therefore an object of the present invention to improve the durability and ruggedness of a dolly with respect to its wheel assemblies.

This and other objects, advantages and features in accordance with the present invention are provided by a dolly comprising a bottom deck, an internal rib structure within the bottom deck, a top deck enclosing the internal rib structure, and a plurality of wheels assemblies coupled to the bottom deck.

More particularly, the bottom deck may have a rectangular shape and comprises a closed bottom surface, and a pair of spaced apart sides walls extending outwards from the closed bottom surface. The internal rib structure may be within the bottom deck and extends between the pair of spaced apart sides walls, and has a recessed wheel assembly receiving area in each respective corner of the bottom deck. The top deck may have a rectangular shape and comprises a closed top surface coupled to the pair of spaced apart side walls of the bottom deck to enclose the internal rib structure.

Each wheel assembly comprises an upper plate within a respective recessed wheel assembly receiving area of the internal rib structure, and a lower plate adjacent an under side of the closed bottom surface and aligned with its corresponding upper plate. A plurality of fasteners secure the upper and lower plates to the bottom deck. A wheel is coupled to the lower plate.

Each recessed wheel assembly receiving area in the internal rib structure advantageously holds in place the upper plate of a wheel assembly associated therewith. In addition, the upper and lower plates and the fasteners for each wheel assembly form a box-shaped configuration. With the box-shaped configuration secured in place by the wheel assembly receiving area in the bottom deck, the durability and ruggedness of the dolly is advantageously improved.

The upper plate of each wheel assembly may be rectangular shaped, and each recessed wheel assembly receiving area within the internal rib structure may also be rectangular shaped to receive the upper plate. Each recessed wheel assembly receiving area may include a section of ribs that is recessed and a section of ribs that is not recessed, wherein the upper plate includes an opening corresponding to the section of ribs that is not recessed. The opening in the upper plate may be circular shaped, wherein the section of ribs that is not recessed extend through the opening to provide additional support for the wheel assembly.

The internal rib structure may be monolithically formed with the bottom deck. The internal rib structure may comprise a plurality of intersecting ribs. The top deck may be welded to the pair of spaced apart sides walls of the bottom deck. Since the internal rib structure is not exposed, and the external surfaces of the bottom and top decks are relatively smooth and flat, the dolly is very hygienic.

The bottom deck, the internal rib structure and the top deck may comprise thermoplastic or other polymer materials. The bottom deck may comprise at least one pair of wheel guards adjacent a pair of wheel assemblies. At least one pair of wheel assemblies comprise swivel wheels.

### Brief Description of the Drawings

FIG. 1 is a top perspective view of a dolly in accordance with the present invention.

FIG. 2 is a top perspective view of the dolly shown in FIG. 1 with the top deck removed.

FIG. 3 is a side perspective view of the dolly shown in FIG. 1.

FIG. 4 is a bottom perspective view of the dolly shown in FIG. 1.

FIG. 5 is a side perspective view of a wheel assembly for the dolly shown in FIG. 1.

FIG. 6 is a detailed top perspective view of a recessed wheel assembly receiving area within the internal rib structure in the bottom deck of the dolly in accordance with the present invention.

FIG. 7 is a cross-sectional side perspective view of the wheel assembly within the recessed wheel assembly receiving area shown in FIG. 6.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

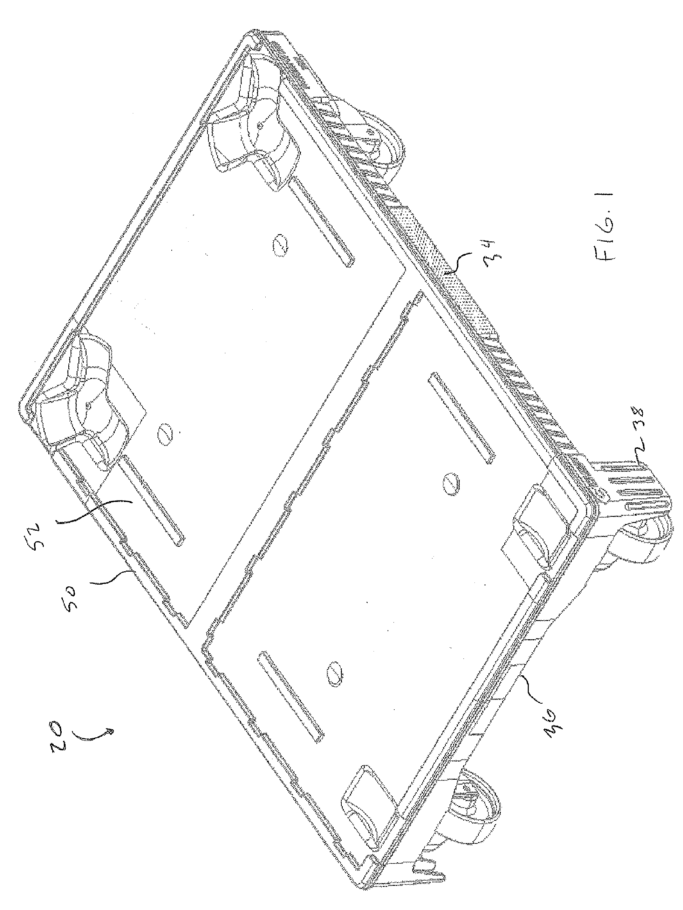

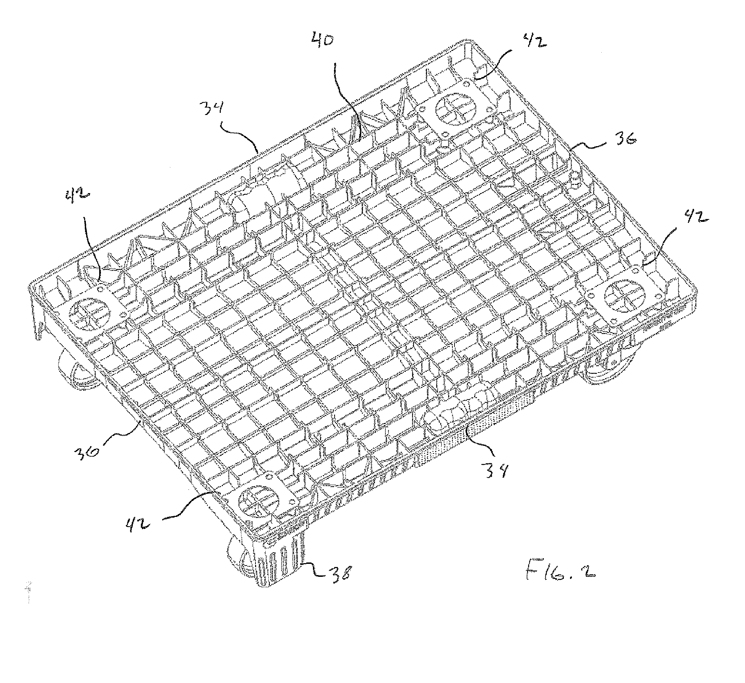

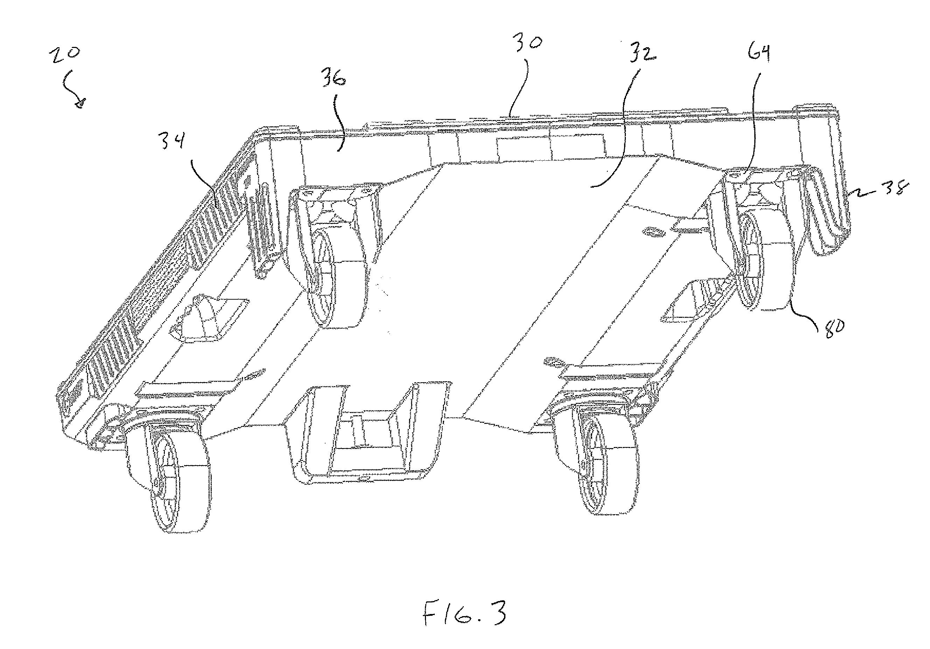

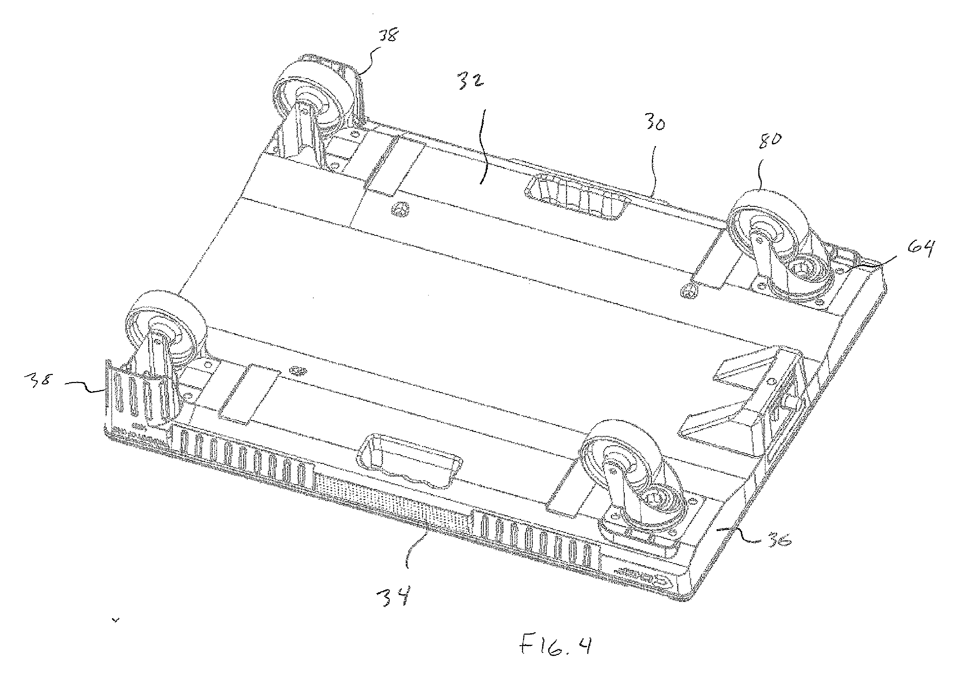

Referring initially to FIGS. 1-4, a dolly **20** with strengthened wheel assemblies will be discussed. The dolly **20** comprises a bottom deck **30** with a closed bottom surface **32,** and a pair of spaced apart side walls **34**, **36** extending outwards from the closed bottom surface. An internal rib structure **40** is within the bottom deck 30 and extends between the pair of spaced apart side walls **34**, **36**. The internal rib structure **40** has a recessed wheel assembly receiving area **42** in each respective corner of the bottom deck **30.** A top deck **50** comprises a closed top surface **52** coupled to the pair of spaced apart sides walls **34**, **36** of the bottom deck **30** to enclose the internal rib structure **40.**

Wheels assemblies **60** are coupled to the bottom deck **30**. Each wheel assembly **60** comprises an upper plate **62** within a respective recessed wheel assembly receiving area **42** of the internal rib structure **40**. A lower plate **64** is adjacent an under side of the closed bottom surface and aligned with its corresponding upper plate **62**. Fasteners **70** are used for securing the upper and lower plates **62**, **64** to the bottom deck **30**. A wheel **80** is coupled to the lower plate **64**.

Each recessed wheel assembly receiving area **42** in the internal rib structure **40** advantageously holds in place the upper plate **62** of a wheel assembly **60** associated therewith. In addition, the upper and lower plates **62**, **64** along with the fasteners **70** for each wheel assembly **60** form a box-shaped configuration. With the box-shaped configuration secured in place by the wheel assembly receiving area **42** in the bottom deck **30**, the durability and ruggedness of the dolly **20** is advantageously improved.

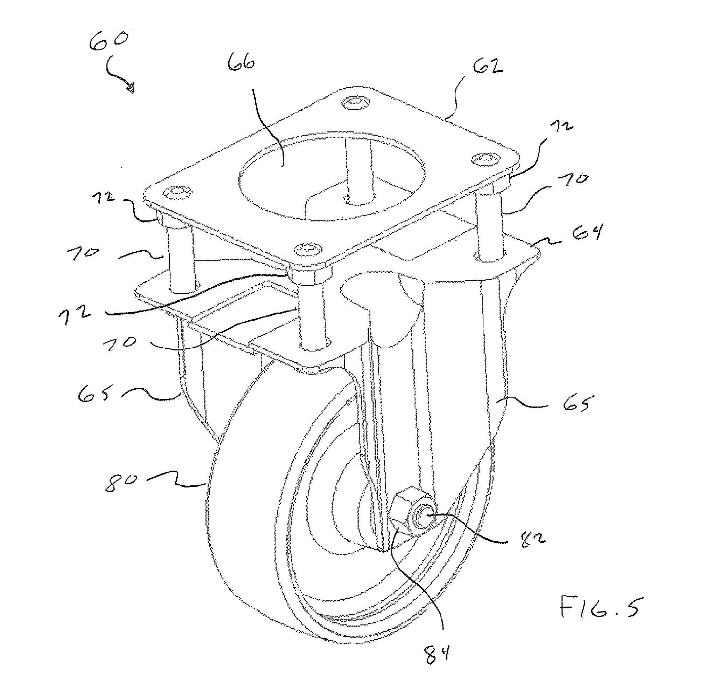

The box-shaped configuration of each wheel assembly **60** is best illustrated in FIG. 5 without the bottom deck **30** and internal rib structure being positioned between the upper and lower plates **62**, **64**. The upper and lower plates **62**, **64** are rectangular shaped, and are preferably made out of steel. The upper plate **62** includes threaded nuts **72** coupled to an underside thereof. Each threaded nut **72** may be welded to the upper plate **62**, for example. There are a total of four threaded nuts **72**, one at each corner of the upper plate **62**. However, the wheel assembly **60** is not limited to four fasteners. The fasteners **70** are threaded bolts, the ends of which are received by the threaded nuts **72**.

The wheels **80** may be nylon wheels, for example. Each lower plate **64** includes side extensions **65** that have an opening extending through each side extension. A wheel **80** is held in place between the side extensions by a bolt **82** and nut **84**. At least one of the pairs of wheel assemblies **60** is configured so that the wheels **80** swivel. The swivel wheels are typically on the front of the dolly **20** to aid in steering or directing the dolly. To protect the rear wheels, the bottom deck **30** may include wheel guards **82**. The wheel guards 82 are molded extensions of the bottom deck **30**.

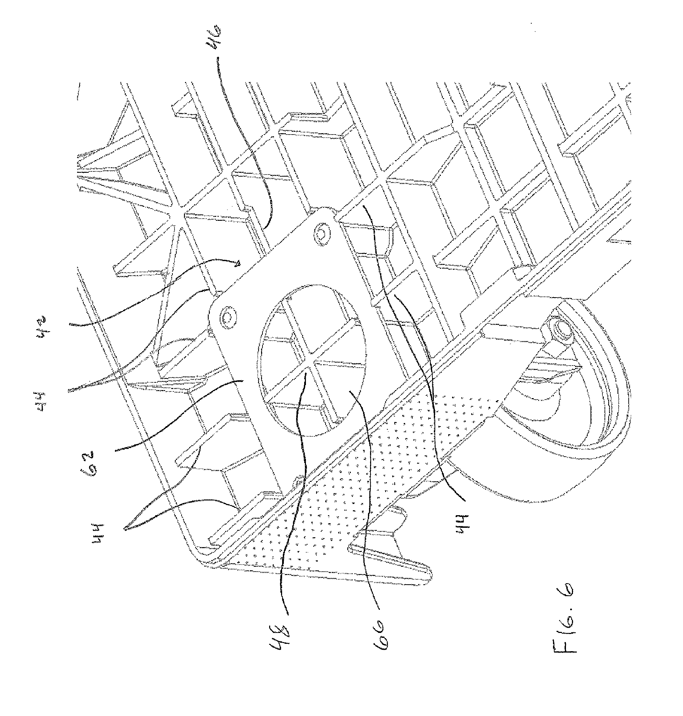

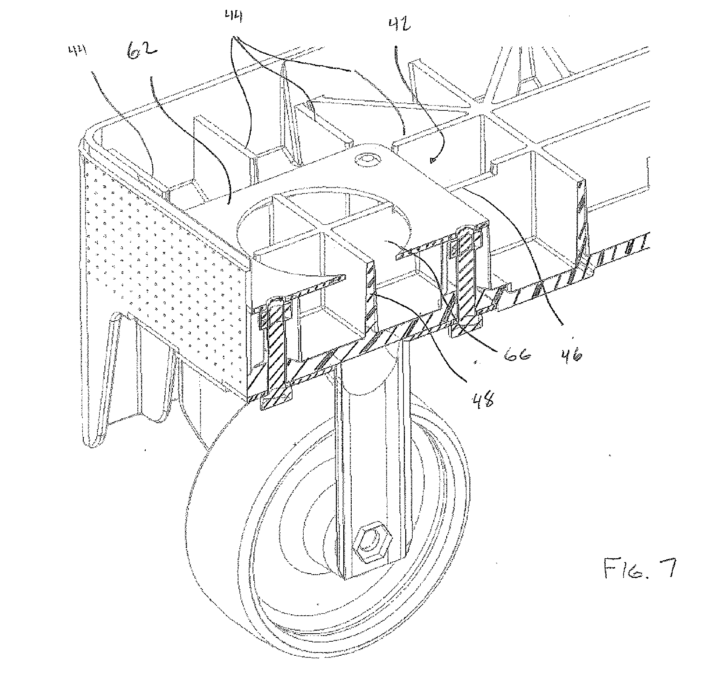

The recessed wheel assembly receiving area **42** within the internal rib structure **40** will now be discussed in greater detail with reference to FIGS. 6 and 7. The upper plate **62** of each wheel assembly **60** is rectangular shaped, and each recessed wheel assembly receiving area **42** within the internal rib structure **40** is also rectangular shaped to receive the upper plate.

When the upper plate **62** is in place, the internal rib sections **44** adjacent the recessed wheel assembly receiving area **42** extend in height above the upper plate. This advantageously helps to hold the wheel assembly **60** in place and thus reduce damage should it receive an impact from a fork tine, for example.

In addition, each recessed wheel assembly receiving area **42** includes a section **46** of ribs that are recessed and a section **48** of ribs that are not recessed. The upper plate **62** includes an opening **66** corresponding to the section 48 of ribs that are not recessed. The opening **66** in the upper plate **62** may be circular shaped, for example. The opening **66** is not limited to a circle and may be other configurations, such as a rectangle, for example. The section **68** of ribs that are not recessed extend through the opening to provide additional support.

The bottom deck **30**, the internal rib structure **40**, and the top deck **50** may be molded from thermoplastic or other polymer materials. The internal rib structure **40** may be monolithically formed with the bottom deck **30**. As illustrated in the figures, the internal rib structure **40** comprises a plurality of intersecting ribs. The top deck **50** is welded to the bottom deck **30**, and more particularly, to the pair of spaced apart sides walls **34**, **36** of the bottom deck.

Since the internal rib structure **40** is not exposed, and the external surfaces of the bottom and top decks **30**, **50** are relatively smooth and flat, the dolly is easy to keep clean, which makes it very hygienic.

The other polymer material may include high density polyethylene (HDPE), polypropylene (PP), among other polymer materials. As may be appreciated by those skilled in the art, the polymer materials may be filled or unfilled and/or may include particulate or fibrous, natural or synthetic materials, among other features. For example, unfilled HDPE may provide improved impact strength, PP having strengtheners (i.e., long glass fibers) may provide improved structural properties, and unfilled PP with random copolymers may provide improved reinforcement qualities.

The bottom and top decks **30**, **50** may be molded from different thermoplastics or polymer materials. For example, the top deck **50** may be molded from a first type of thermoplastic or polymer material, while the bottom deck **30** may be molded from a second type of thermoplastic or polymer material. According to alternative embodiments, all or a portion of the bottom and top decks **30**, **50** may be constructed from materials other than plastic, such as wood and/or metal, for example.

The illustrated dolly **20** is substantially rectangular-shaped. An example size of the dolly **20** is 800 mm by 600 mm, for example. As readily appreciated by those skilled in the art, the dolly **20** may also be formed with other rectangular shapes, such as 600 mm by 400 mm, for example. Dolly sizes typically vary in 200 mm increments. The dolly **20** may include rounded corners/edges along the perimeter thereof. Rounded corners/edges help to reduce and/or deflect damage during impact with the tines of a forklift, as well as providing an improved aesthetic appearance. Although not illustrated, a handle may attach to the top deck **50** to steer the dolly **20**.

Many modifications and other embodiments of the invention will come to the mind of one skilled in the art having the benefit of the teachings presented in the foregoing descriptions and the associated drawings. Therefore, it is to be understood that the invention is not to be limited to the specific embodiments disclosed, and that modifications and embodiments are intended to be included within the scope of the appended claims.

## Claims

1. A dolly comprising:
a bottom deck having a rectangular shape and comprising a closed bottom surface, and a pair of spaced apart sides walls extending outwards from said closed bottom surface;
an internal rib structure within said bottom deck and extending between said pair of spaced apart sides walls, and having a recessed wheel assembly receiving area in each respective corner of said bottom deck;
a top deck having a rectangular shape and comprising a closed top surface coupled to said pair of spaced apart sides walls of said bottom deck to enclose said internal rib structure; and
a plurality of wheel assemblies coupled to said bottom deck, each wheel assembly comprising
an upper plate within a respective recessed wheel assembly receiving area of said internal rib structure,
a lower plate adjacent an under side of said closed bottom surface and aligned with a corresponding upper plate,
a plurality of fasteners for securing said upper and lower plates to said bottom deck, and
a wheel coupled to said lower plate.

2. The dolly according to Claim 1 wherein said upper plate of each wheel assembly is rectangular shaped, and wherein each recessed wheel assembly receiving area within said internal rib structure is rectangular shaped to receive said upper plate.

3. The dolly according to Claim 2 wherein each recessed wheel assembly receiving area includes a section of ribs that is recessed and a section of ribs that is not recessed, and wherein said upper plate includes an opening corresponding to the section of ribs that is not recessed.

4. The dolly according to Claim 3 wherein the opening in said upper plate is circular shaped, and wherein the section of ribs that is not recessed extend through the opening.

5. The dolly according to Claim 1 wherein said internal rib structure is monolithically formed with said bottom deck.

6. The dolly according to Claim 1 wherein said internal rib structure comprises a plurality of intersecting ribs.

7. The dolly according to Claim 1 wherein said upper plate comprises a plurality of threaded nuts coupled to an underside thereof, and wherein said plurality of fasteners comprises a plurality of threaded bolts the ends of which are received by said plurality of nuts.

8. The dolly according to Claim 1 wherein said top deck is welded to said pair of spaced apart sides walls of said bottom deck.

9. The dolly according to Claim 1 wherein said bottom deck, said internal rib structure and said top deck comprises thermoplastic or other polymer materials.

10. The dolly according to Claim 1 wherein said bottom deck comprises at least one pair of wheel guards adjacent a pair of wheel assemblies.

11. The dolly according to Claim 1 wherein at least one pair of wheel assemblies comprises swivel wheels.
